# EUROPEAN PATENT SPECIFICATION

(11) **EP 4 001 838 B1**
(45) Date of publication and mention of the grant of the patent: **02.07.2025**
(21) Application number: 20840580.3
(22) Date of filing: 08.01.2020
(51) Int. Cl.: G01C 9/24, G01C 9/12, G01C 9/16, G01C 9/28, G01C 9/32, G01C 9/34

(54) **MULTIFUNCTIONAL LEVEL GAUGE FOR APPLYING NANO ADHESIVE TAPE FOR CONVENIENT AND QUICK POSITIONING**
MULTIFUNKTIONALE WASSERWAAGE ZUM AUFBRINGEN VON NANOKLEBEBAND ZUR BEQUEMEN UND SCHNELLEN POSITIONIERUNG
INDICATEUR DE NIVEAU MULTIFONCTIONNEL POUR L'APPLICATION DE RUBAN ADHÉSIF NANOMÉTRIQUE PERMETTANT UN POSITIONNEMENT PRATIQUE ET RAPIDE

(30) Priority: 18.07.2019 CN 201910648360
(43) Date of publication of application: 25.05.2022
(73) Proprietor: Excellent New Precision Technology Limited, Causeway Bay, Hong Kong 999077 (CN)
(72) Inventor: CHAN, Chefung, Hong Kong 999077 (CN)
(74) Representative: Izquierdo Blanco, Maria Alicia
(86) International application number: PCT/CN2020/071008
(87) International publication number: WO 2021/008103

(56) References cited:
- EP-A2- 1 857 778
- CN-A- 107 796 369
- CN-A- 110 231 017
- CN-U- 204 128 553
- CN-U- 204 128 553
- CN-U- 204 421 900
- CN-U- 204 421 900
- CN-U- 209 069 265
- CN-U- 209 069 265
- CN-U- 209 894 169
- CN-Y- 2 327 989

## Description

### TECHNICAL FIELD

The invention relates to the technical field of building measuring leveling ruler, in particular to a multifunctional leveling meter for convenient positioning using nano adhesive stickers.

### BACKGROUND

In construction engineering, decoration and other industries, it is usually necessary to measure and adjust horizontal angles, and horizontal rulers are generally used as instruments for measuring the level. At present, there are many kinds of leveling rulers on the market, which can realize horizontality and verticality measurements, as well as 45° angle measurements. However, the existing leveling rulers cannot realize 360° all directional measurement in addition to conventional horizontality and verticality measurements. Some leveling rulers, such as electronic leveling rulers, can realize it, but they are very expensive, which is not advantageous for wide use.

In addition, when an existing leveling meter is used to measure the horizontal plane or vertical plane of an object, it must be held and fixed by hand to keep it fitted snugly to the measured object. Therefore, holding the instrument by hand determines the contact degree, and due to human factors, it will directly affect the accuracy of the measurement and limit the applicable range of the instrument. In practice, it is found that setting nano adhesive stickers on leveling instruments can make positioning convenient and the adhesive effect excellent. However, nano adhesive stickers also have the following disadvantages: for example, adsorbing dust, mud and sand; and if measurement is performing on some objects with smooth surface, such as glass and stainless steel, a nano adhesive film is easily out of position because the leveling ruler needs to frequently shift for the measurement operation.
The utility model application CN204421900U discloses a multifunctional positioning horizontal ruler which comprises a main ruler, a horizontal bubble tube and a vertical bubble tube, wherein the horizontal bubble tube and the vertical bubble tube are arranged on the main ruler; the horizontal bubble tube is arranged in the middle of the upper side of the main ruler; the vertical bubble tube is arranged at one end of the main ruler. The multifunctional positioning horizontal ruler is characterized in that a groove is formed in the other end of the main ruler; an angle measuring device is correspondingly inside the groove; two ends of the angle measuring device are moveably connected into the groove. Due to additional arrangement of the angle measuring device on the basis of a conventional horizontal ruler, all-directional measurement of 360 degrees can be realized on the basis of horizontal measurement, vertical measurement and horizontal measurement, and vertical lines connected with X, Y and Z coordinates can be measured at a time.

### SUMMARY

Aiming at the problems of the prior art, the resent application proposes a multifunctional leveling meter for convenient positioning using nano adhesive stickers according to claim 1.

Preferably, a positioning cavity is provided in the slot wall of the directional insertion slot, and the insertion portion is provided with a positioning bump corresponding to the positioning cavity, when the positioning and mounting plate and the positioning and mounting base are inserted into place, the positioning bump is exactly located in the positioning cavity.

Preferably, the outer side of the positioning and mounting plate is provided with a metal pressing frame for reinforcing the nano adhesive sticker, after being bent, both sides of the metal pressing frame are clamped and fixed with both sides of the positioning and mounting plate, and a strip hole for facilitating the exposing of the nano adhesive sticker is provided in the middle of the metal pressing frame.

Preferably, the angle measuring device and the swing type deflection measuring structure are arranged in a completely transparent protective shell, the protective shell comprises a front shell cover and a rear shell cover which are combined with each other, the lower end of the front shell cover is inserted and fixed inside the second end of the leveling ruler, and the middle portion of the front shell cover is provided with positioning and mounting portions for fixedly mounting the angle measuring device and the swing type deflection measuring structure.

Preferably, the angle measuring device comprises a circular dial and a dial fixture, wherein a rotating shaft is arranged at the center of the circular dial, a needle perpendicular to the rotating shaft is provided at the rotating shaft, and a counterweight block is connected at the tail end of the needle; the circumference of the dial fixing member is provided with positioning and plug-in posts corresponding to the positioning and mounting portions, when the front shell cover and the rear shell cover are combined together, the two ends of the rotating shaft and the dial fixture are respectively fixed between the front shell cover and the rear shell cover, and the swing connecting rod is horizontally and transversely mounted between the front shell cover and the rear shell cover.

Preferably, a separate mounting chamber is provided at and extends from the lower end of the front shell cover, and the separate mounting chamber is integrally formed with the front shell cover; an LED lamp, a circuit board, a rechargeable battery and a battery cover are arranged in the separate mounting chamber, the LED lamp and the rechargeable battery are both electrically connected with the circuit board, one side of the circuit board is provided with a USB interface for external connection and charging and a push switch for controlling the LED lamp, the sides of the battery cover are provided with snap-fit snap joints, the battery cover is connected with the separate mounting chamber by snap-fit snap joints, and the LED lamp, the circuit board and the rechargeable battery are encapsulated inside the separate mounting chamber.

Preferably, the separate mounting chamber is provided with a transparent plate, and the transparent plate is provided with a circular hole adapted to the size of the LED lamp, and one end of the LED lamp protrudes out of the circular hole; and the transparent plate is further provided with a circular fixing hole, and the end of the alignment needle is inserted and fixed in the circular fixing hole.

Preferably, the leveling ruler is provided with a charge sealing rubber sheet on the side of the USB interface, and a rubber pull rivet for plugging in the leveling ruler is arranged at one end of the charge sealing rubber sheet.

Preferably, the top of the protective shell and the bottom of the leveling ruler are respectively provided with fall protection silicone rubber parts, each fall protection silicone rubber part comprises a rubber plug-in post and several silicone rubber strips, the rubber plug-in post is transversely provided with a locking bolt and a fixing nut, when the rubber plug-in post is inserted into the inside of the protective shell and the leveling ruler, the locking bolt is threaded with the fixing nut to fix the fall protection silicone rubber part.

Preferably, the first end of the leveling ruler is provided with a plastic hanger for convenient hanging and placing, the plastic hanger is fixed through in the leveling ruler, and the plastic hanger comprises a front hanger cover and a rear hanger cover which can be snap-fitted with each other; the plastic hanger is provided with a first circular through hole for hanging and a second circular through hole for mounting the horizontal leveler, the horizontal leveler is circular in shape, and the horizontal leveler is embedded within the second circular through hole.

Preferably, there is a hanger connector between the first circular through hole and the second circular through hole, and the surface of the hanger connector is provided with a recess for sticking product's labels.

Preferably, the vertical leveler is arranged within a rectangular fixture, the rectangular fixture comprises a rectangular insertion portion and a trapezoidal mounting portion, the first side of the leveling ruler is provided with a trapezoidal opening, the vertical leveler is fixedly arranged within the trapezoidal mounting portion, the rectangular fixture is transversely inserted and fixed on the leveling ruler through the rectangular insertion portion.

### Advantageous Effects of Invention:

In the present application, the upper end of the leveling ruler is provided with an angle measuring device capable of 360° all directional measurement and a swing type deflection measuring structure. In addition to 360° all directional angle measurement, horizontal, vertical and plane measurements can be carried out at the same time. The counterweight cone is maintained in a vertical state all the time due to the gravity action of the counterweight cone, and during measurement, whether the surface to be measured is inclined can be judged by observing whether the counterweight cone coincides with the alignment needle. In the present application, the multifunctional leveling meter can be directly sticked on the surface to be measured by the nano adhesive sticker on the side, so as to facilitate operators to place the leveling meter, improve operation efficiency and show a better measuring effect.

### BRIEF DESCRIPTION OF THE DRAWINGS

FIG. 1 is a perspective view of the multifunctional leveling meter provided by the present application;
FIG. 2 is a exploded structural view of the multifunctional leveling meter provided by the present application;
FIG. 3 is a in use status reference view of the multifunctional leveling meter provided by the present application;
FIG. 4 is a structural view of an angle measuring device according to the present application;
FIG. 5 is a further perspective view of the multifunctional leveling meter provided by the present application;
FIG. 6 is an exploded structural view of the adhesive sticker positioning structure of the present application.

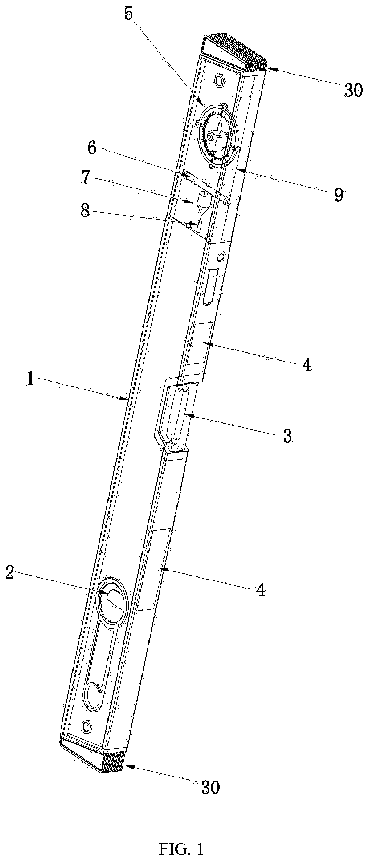

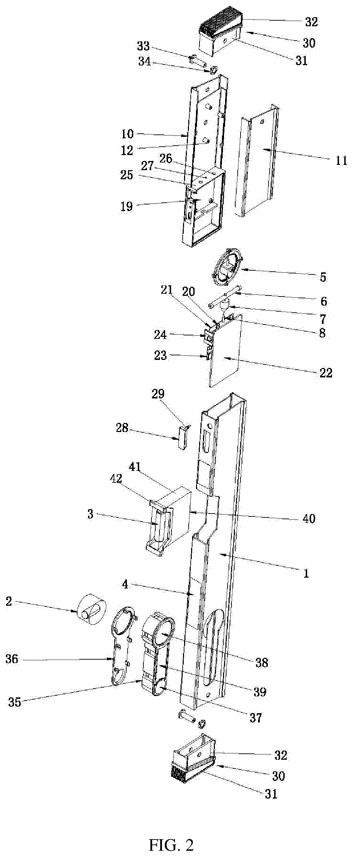

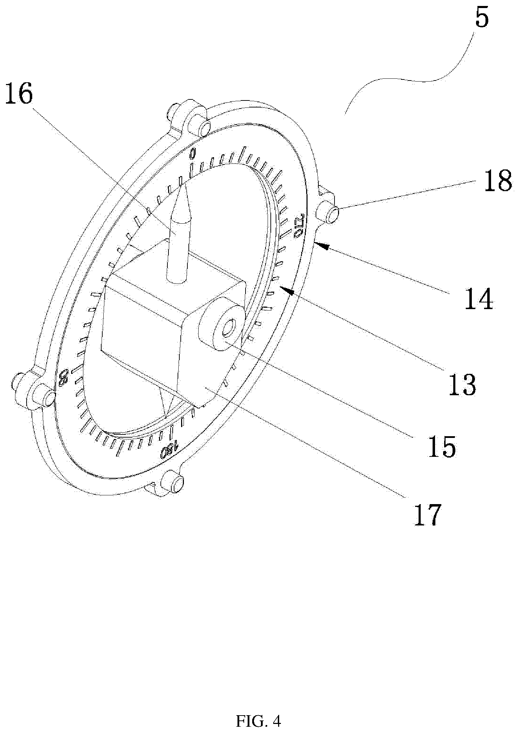

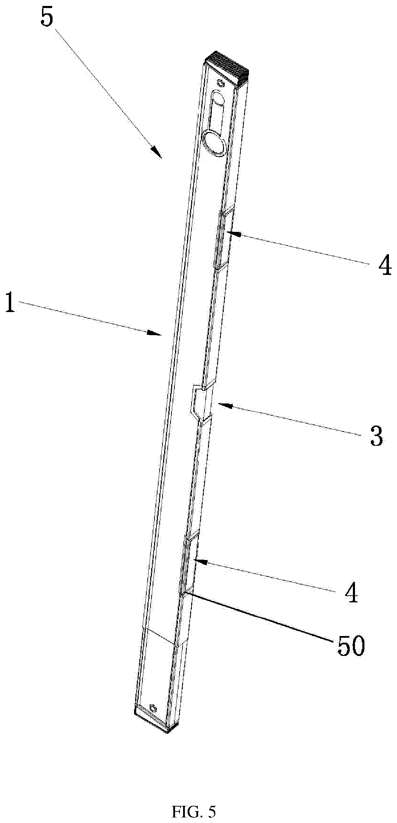

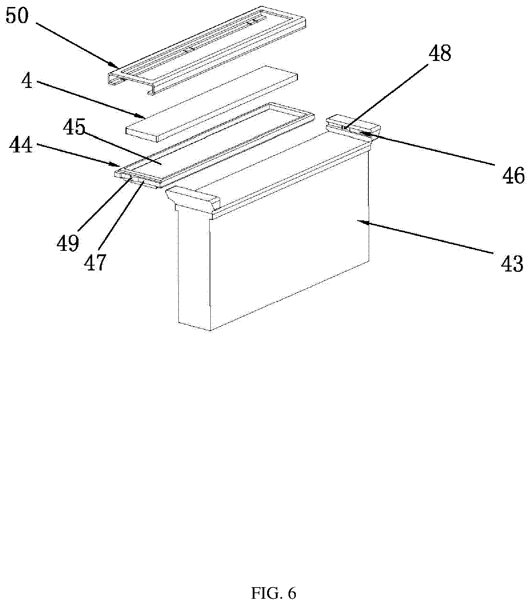

Reference numerals in FIGs. 1 to 6 include:
1 leveling ruler; 2 horizontal leveler; 3 vertical leveler; 4 nano adhesive sticker; 5 angle measuring device; 6 swing connecting rod; 7 counterweight cone; 8 alignment needle; 9 protective shell; 10 front shell cover; 11 rear shell cover; 12 positioning and mounting portion; 13 circular dial; 14 dial fixture; 15 rotating shaft; 16 needle; 17 counterweight block; 18 positioning and plug-in post; 19 separate mounting chamber; 20 LED lamp; 21 circuit board; 22 battery cover; 23 USB interface; 24 push switch; 25 transparent plate; 26 circular hole; 27 circular fixing hole; 28 charge sealing rubber sheet; 29 rubber pull rivet; 30 fall protection silicone rubber part; 31 rubber plug-in post; 32 silicone rubber strip; 33 locking bolt; 34 fixing nut; 35 front hanger cover; 36 rear hanger cover; 37 first circular through hole; 38 second circular through hole; 39 hanger connector; 40 rectangular fixture; 41 rectangular insertion portion; 42 trapezoidal mounting portion; 43 positioning and mounting base; 44 positioning and mounting plate; 45 cavity; 46 directional insertion slot; 47 insertion portion; 48 positioning cavity; 49 positioning bump; 50 metal pressing frame.

### DETAILED DESCRIPTION

For an easier understanding by those skilled in the art, the present application will be further explained below in conjunction with the embodiments and the accompanying drawings and the contents referred to in the embodiments are not limiting of the present application. The present application is described in detail below in conjunction with the accompanying drawings.

See FIGs. 1 to 4, the present application provides a multifunctional leveling meter for convenient positioning using nano adhesive stickers comprising a leveling ruler 1 which is a hollow section bar. The leveling ruler 1 is provided with a horizontal leveler 2 and a vertical leveler 3, respectively. The horizontal leveler 2 is arranged within the lower end of the leveling ruler 1, and the vertical leveler 3 is arranged on the left side of the leveling ruler 1. The left side surface of the leveling ruler 1 is sticked and fixed with at least two nano adhesive stickers 4 for convenient positioning. An adhesive sticker positioning structure is arranged against the nano adhesive sticker 4. The nano adhesive sticker 4 has the characteristics of ease of use and high fixability, and can be applied in many application scenarios, for example, it can be sticked on any smooth surface. For example, it can be sticked on glass facades, stainless steel surfaces, wood surfaces, aluminum surfaces, ceramic tiles and painted walls, etc. When in use, an operator holds the right side of the leveling ruler 1, and fit the left side of the leveling ruler 1 snugly to the surface of the object to be measured. Applying nano adhesive sticker 4 on the multifunctional leveling meter is a new breakthrough in measurement applied technology. As another embodiment, several magnet blocks can be fixedly arranged inside the right side of the leveling ruler 1 of the present application, and the multifunctional leveling meter can be tightly sucked on the surface of the object to be measured of iron through the magnet blocks, so that the multifunctional leveling meter can be more widely utilized. In the present application, the multifunctional leveling meter can be directly sticked on the surface to be measured by the nano adhesive sticker 4 on the side or sucked tightly on the surface of the object to be measured made of iron by means of magnetic attraction, so as to facilitate operators to place the leveling meter, improve operation efficiency and show a better measuring effect.

In the present application, the adhesive sticker positioning structure comprises a positioning and mounting base 43 inserted into the leveling ruler and a positioning and mounting plate 44, wherein the upper surface of the positioning and mounting plate 44 is provided with a cavity 45 for accommodating the nano adhesive sticker. Directional insertion slots 46 are respectively provided on the left and right sides of the positioning and mounting base 43, and insertion portions 47 fitted with the directional insertion slots 46 are provided on the left and right sides of the positioning and mounting plate 44. The positioning and mounting plate 44 and the positioning and mounting base 43 are integrally assembled by inserting insertion portions 47 into positioning and insertion slots 46. Further, a positioning cavity 48 is provided in the slot wall of the directional insertion slot 46, and the insertion portion 47 is provided with a positioning bump 49 corresponding to the positioning cavity 48. When the positioning and mounting plate 44 and the positioning and mounting base 43 are inserted into place, the positioning bump 49 is exactly located in the positioning cavity 48, which can avoid the error of not being mounted in place. Further, the outer side of the positioning and mounting plate 44 is provided with a metal pressing frame 50 for reinforcing the nano adhesive sticker. After being bent, both sides of the metal pressing frame 50 are clamped and fixed with both sides of the positioning and mounting plate 44, and a strip hole for facilitating the exposing of the nano adhesive sticker is provided in the middle of the metal pressing frame 50.

In the present application, the nano adhesive sticker 4 and the positioning and mounting plate 44 are fixedly assembled integrally by using the metal pressing frame 50. The nano adhesive sticker film is firmly pressed by the metal pressing frame 50, so that the nano adhesive sticker 4 is conveniently inserted and mounted on the positioning and mounting base 43, and the front and back surfaces are conveniently swapped for further use. If the stickiness of the nano adhesive sticker 4 become insufficient after being used for a period, the nano adhesive sticker 4 and the positioning and mounting plate 44 can be replaced as a whole without separately re-sticking and fixing the nano adhesive sticker 4. When a measurement operation is to be performed, the positioning and mounting plate 44 is sticked on the object to be measured with the side surface provided with the nano adhesive sticker 4 facing outward to perform the measurement, which is easy to observe. When measurement is not needed or after use, the nano adhesive sticker 4 and the positioning and mounting plate 44 are removed and turned over as a whole, and the side of the positioning and mounting plate 44 provided with the nano adhesive sticker 4 is turned to be facing inward, so that the nano adhesive sticker 4 is prevented from long term exposure to the outside, and the nano adhesive sticker can be well stored and protected. The service life of nano adhesive sticker 4 can be prolonged.

In the present application, the upper end of the leveling ruler 1 is provided with an angle measuring device 5 capable of 360° all directional measurement and a swing type deflection measuring structure for cooperatively observing whether the intersecting surface is inclined or not. Specifically, the swing type deflection measuring structure comprises a swing connecting rod 6, a counterweight cone 7 and an alignment needle 8, wherein the counterweight cone 7 is mounted in the middle of the swing connecting rod 6, and the alignment needle 8 vertically points to the counterweight cone 7. The counterweight cone 7 is maintained in a vertical state all the time due to the gravity action of the counterweight cone 7, and during measurement, whether the surface to be measured is inclined can be judged by observing whether the counterweight cone 7 coincides with the alignment needle 8.

Preferably, the angle measuring device 5 and the swing type deflection measuring structure are arranged in a completely transparent protective shell 9. The protective shell 9 comprises a front shell cover 10 and a rear shell cover 11 which are combined with each other. The lower end of the front shell cover 10 is inserted and fixed inside the upper end of the leveling ruler 1, and the middle portion of the front shell cover 10 is provided with positioning and mounting portions 12 for fixedly mounting the angle measuring device 5 and the swing type deflection measuring structure. In the present application, the protective shell 9 serves as the mounting carrier of the angle measuring device 5 and the swing type deflection measuring structure, and the protective shell 9 is made of completely transparent PC material, which is convenient for observation and can reduce the overall weight of the leveling meter.

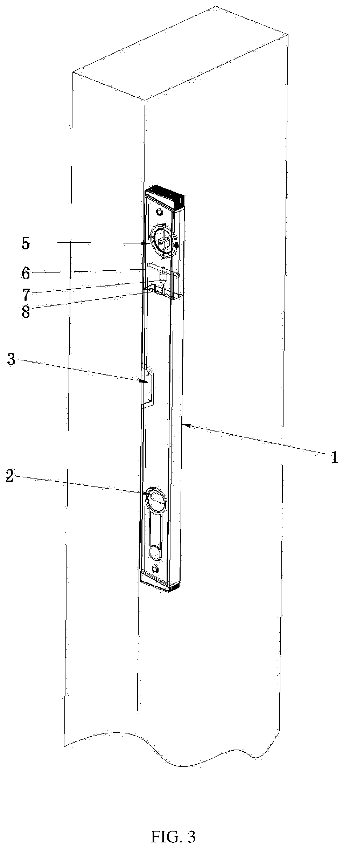

Wherein, the angle measuring device 5 comprises a circular dial 13 and a dial fixture 14, wherein a rotating shaft 15 is arranged at the center of the circular dial 13, a needle 16 perpendicular to the rotating shaft 15 is provided at the rotating shaft 15, and a counterweight block 17 is connected at the tail end of the needle 16. The circumference of the dial fixing member 14 is provided with positioning and plug-in posts 18 corresponding to the positioning and mounting portions 12, when the front shell cover 10 and the rear shell cover 11 are combined together, the two ends of the rotating shaft 15 and the dial fixture 14 are respectively fixed between the front shell cover 10 and the rear shell cover 11, and the swing connecting rod 6 is horizontally and transversely mounted between the front shell cover 10 and the rear shell cover 11. When in use, due to the action of gravity, the needle 16 always points vertically upward, therefore in the case where the leveling ruler is vertical placed (as shown in FIG. 3), the scale pointed by the needle 16 is set to 0, and scales such as 90°, 180° and 270° are sequentially set clockwise, so that when in use, the scale pointed by the needle 16 will be the angle of the measured surface.

In the present application, a separate mounting chamber 19 is provided at and extends from the lower end of the front shell cover 10, and the separate mounting chamber 19 is integrally formed with the front shell cover 10. An LED lamp 20, a circuit board 21, a rechargeable battery (not shown in the figure) and a battery cover 22 are arranged in the separate mounting chamber 19. The LED lamp 20 and the rechargeable battery are both electrically connected with the circuit board 21. One side of the circuit board 21 is provided with a USB interface 23 for external connection and charging and a push switch 24 for controlling the LED lamp 20. The sides of the battery cover 22 are provided with snap-fit snap joints. The battery cover 22 is connected with the separate mounting chamber 19 by snap-fit snap joints, and the LED lamp 20, the circuit board 21 and the rechargeable battery are encapsulated inside the separate mounting chamber 19, so that they can be conveniently assembled inside the leveling ruler 1. Further, the separate mounting chamber 19 is provided with a transparent plate 25, and the transparent plate 25 is provided with a circular hole 26 adapted to the size of the LED lamp 20, and one end of the LED lamp 20 protrudes out of the circular hole 26; and the transparent plate 25 is further provided with a circular fixing hole 27, and the end of the alignment needle 8 is directly and interferingly inserted and fixed in the circular fixing hole 27, so that the alignment needle 8 is convenient and simple to position and mount, and will not readily loosen. In addition, by providing the LED lamp 20 in the present application, with the irradiation of the LED lamp 20 during measurement, the visibility is better, which is convenient for accurate measurement.

Further, the leveling ruler 1 is provided with a charge sealing rubber sheet 28 on the side of the USB interface 23, and a rubber pull rivet 29 for plugging in the leveling ruler 1 is arranged at one end of the charge sealing rubber sheet 28, wherein the rubber pull rivet 29 enables the rotation of the charge sealing rubber sheet 28 relative to the leveling ruler 1. When the charge sealing rubber sheet 28 is snap-fitted on the outside of the USB interface 23, a good waterproof sealing effect is obtained, preventing water vapor from penetrating into the separate mounting chamber 19.

In the present application, the top of the protective shell 9 and the bottom of the leveling ruler 1 are respectively provided with fall protection silicone rubber parts 30, each fall protection silicone rubber part 30 comprises a rubber plug-in post 31 and several silicone rubber strips 32. The rubber plug-in post 31 is transversely provided with a locking bolt 33 and a fixing nut 34. When the rubber plug-in post 31 is inserted into the inside of the protective shell 9 and the leveling ruler 1, the locking bolt 33 is threaded with the fixing nut 34 to fix the fall protection silicone rubber part 30. If the multifunctional leveling meter accidentally falls to the ground, the fall protection silicone rubber parts 30 located at both ends can play a role of cushioning and protection to prevent the level meter from damage caused by hard contact.

In the present application, the lower end of the leveling ruler 1 is provided with a plastic hanger for convenient hanging and placing, the plastic hanger is fixed through in the leveling ruler 1, and the plastic hanger comprises a front hanger cover 35 and a rear hanger cover 36 which can be snap-fitted with each other. The plastic hanger is provided with a first circular through hole 37 for hanging and a second circular through hole 38 for mounting the horizontal leveler 2. After the multifunctional leveling meter is used, it is hung up and placed through the first circular through hole 37, which is convenient for placing and taking. The horizontal leveler 2 is circular in shape, and the horizontal leveler 2 is embedded within the second circular through hole 38.

Further, there is a hanger connector 39 between the first circular through hole 37 and the second circular through hole 38, and the surface of the hanger connector 39 is provided with a recess for sticking product's labels.

In the present application, the vertical leveler 3 is arranged within a rectangular fixture 40. The rectangular fixture 40 comprises a rectangular insertion portion 41 and a trapezoidal mounting portion 42. The left side of the leveling ruler 1 is provided with a trapezoidal opening. The vertical leveler 3 is fixedly arranged within the trapezoidal mounting portion 42. The rectangular fixture 40 is transversely inserted and fixed on the leveling ruler 1 through the rectangular insertion portion 41.

The contents described above are only preferred embodiments of the present application and does not limit the present application in any way. Although the present application is disclosed as above in preferred embodiments, it is not intended to limit the present application.

## Claims

1. A multifunctional leveling meter for convenient positioning using nano adhesive stickers comprising a leveling ruler (1) which is a hollow section bar, wherein the leveling ruler (1) is provided with a horizontal leveler (2) and a vertical leveler (3), respectively, the horizontal leveler (2) is arranged within a first end of the leveling ruler (1), and the vertical leveler (3) is arranged on a first side of the leveling ruler (1), wherein the first side surface of the leveling ruler (1) is configured to be sticked and fixed with at least two nano adhesive stickers (4) for convenient positioning, an adhesive sticker positioning structure is arranged against each of the nano adhesive stickers (4); a second end of the leveling ruler (1) is provided with an angle measuring device (5) capable of 360° all directional measurement and a swing type deflection measuring structure for cooperatively observing whether the first side surface is inclined or not, the swing type deflection measuring structure comprises a swing connecting rod (6), a counterweight cone (7) and an alignment needle (8), wherein the counterweight cone (7) is mounted in the middle of the swing connecting rod (6), and the alignment needle (8) vertically points to the counterweight cone (7),
wherein the adhesive sticker positioning structure comprises a positioning and mounting base (43) inserted into the leveling ruler (1) and a positioning and mounting plate (44), and the upper surface of the positioning and mounting plate (44) is provided with a cavity (45) for accommodating nano adhesive stickers (4); directional insertion slots (46) are respectively provided on a first side and a second opposite side of the positioning and mounting base (43), and insertion portions (47) fitted with the directional insertion slots (46) are provided on a first side and a second opposite side of the positioning and mounting plate (44), the positioning and mounting plate (44) and the positioning and mounting base (43) are integrally assembled by inserting the insertion portions (47) into the positioning and insertion slots (46).

2. The multifunctional leveling meter for convenient positioning using nano adhesive stickers according to Claim 1, **characterized in that**: a positioning cavity (48) is provided in the slot wall of the directional insertion slot (46), and the insertion portion (47) is provided with a positioning bump (49) corresponding to the positioning cavity (48), when the positioning and mounting plate (44) and the positioning and mounting base (43) are inserted into place, the positioning bump (49) is exactly located in the positioning cavity (48).

3. The multifunctional leveling meter for convenient positioning using nano adhesive stickers according to Claim 1, **characterized in that**: the outer side of the positioning and mounting plate (44) is provided with a metal pressing frame (50) for reinforcing the nano adhesive sticker (4), after being bent, both sides of the metal pressing frame (50) are clamped and fixed with both sides of the positioning and mounting plate (44), and a strip hole for facilitating the exposing of the nano adhesive sticker is provided in the middle of the metal pressing frame (50).

4. The multifunctional leveling meter for convenient positioning using nano adhesive stickers according to Claim 1, **characterized in that**: the angle measuring device (5) and the swing type deflection measuring structure are arranged in a completely transparent protective shell (9), the protective shell (9) comprises a front shell cover (10) and a rear shell cover (11) which are combined with each other, the lower end of the front shell cover (10) is inserted and fixed inside the second end of the leveling ruler (1), and the middle portion of the front shell cover (10) is provided with positioning and mounting portions (12) for fixedly mounting the angle measuring device (5) and the swing type deflection measuring structure.

5. The multifunctional leveling meter for convenient positioning using nano adhesive stickers according to Claim 4, **characterized in that**: the angle measuring device (5) comprises a circular dial (13) and a dial fixture (14), wherein a rotating shaft (15) is arranged at the center of the circular dial (13), a needle (16) perpendicular to the rotating shaft (15) is provided at the rotating shaft (15), and a counterweight block (17) is connected at the tail end of the needle (16); the circumference of the dial fixing member (14) is provided with positioning and plug-in posts (18) corresponding to the positioning and mounting portions (12), when the front shell cover (10) and the rear shell cover (11) are combined together, the two ends of the rotating shaft (15) and the dial fixture (14) are respectively fixed between the front shell cover (10) and the rear shell cover (11), and the swing connecting rod (6) is horizontally and transversely mounted between the front shell cover (10) and the rear shell cover (11).

6. The multifunctional leveling meter for convenient positioning using nano adhesive stickers according to Claim 4, **characterized in that**: a separate mounting chamber (19) is provided at and extends from the lower end of the front shell cover (10), and the separate mounting chamber (19) is integrally formed with the front shell cover (10); an LED lamp (20), a circuit board (21), a rechargeable battery and a battery cover (22) are arranged in the separate mounting chamber (19), the LED lamp (20) and the rechargeable battery are both electrically connected with the circuit board (21), one side of the circuit board (21) is provided with a USB interface (23) for external connection and charging and a push switch (24) for controlling the LED lamp (20), the sides of the battery cover (22) are provided with snap-fit snap joints, the battery cover (22) is connected with the separate mounting chamber (19) by snap-fit snap joints, and the LED lamp (20), the circuit board (21) and the rechargeable battery are encapsulated inside the separate mounting chamber (19).

7. The multifunctional leveling meter for convenient positioning using nano adhesive stickers according to Claim 6, **characterized in that**: the separate mounting chamber (19) is provided with a transparent plate (25), and the transparent plate (25) is provided with a circular hole (26) adapted to the size of the LED lamp (20), and one end of the LED lamp (20) protrudes out of the circular hole (26); and the transparent plate (25) is further provided with a circular fixing hole (27), and the end of the alignment needle (8) is inserted and fixed in the circular fixing hole (27).

8. The multifunctional leveling meter for convenient positioning using nano adhesive stickers according to Claim 6, **characterized in that**: the leveling ruler (1) is provided with a charge sealing rubber sheet (28) on the side of the USB interface (23), and a rubber pull rivet (29) for plugging in the leveling ruler (1) is arranged at one end of the charge sealing rubber sheet (28).

9. The multifunctional leveling meter for convenient positioning using nano adhesive stickers according to Claim 4, **characterized in that**: the top of the protective shell (9) and the bottom of the leveling ruler (1) are respectively provided with fall protection silicone rubber parts (30), each fall protection silicone rubber part (30) comprises a rubber plug-in post (31) and several silicone rubber strips (32), the rubber plug-in post (31) is transversely provided with a locking bolt (33) and a fixing nut (34), when the rubber plug-in post (31) is inserted into the inside of the protective shell (9) and the leveling ruler (1), the locking bolt (33) is threaded with the fixing nut (34) to fix the fall protection silicone rubber part (30).

10. The multifunctional leveling meter for convenient positioning using nano adhesive stickers according to Claim 1, **characterized in that**: the first end of the leveling ruler (1) is provided with a plastic hanger for convenient hanging and placing, the plastic hanger is fixed through in the leveling ruler (1), and the plastic hanger comprises a front hanger cover (35) and a rear hanger cover (36) which can be snap-fitted with each other; the plastic hanger is provided with a first circular through hole (37) for hanging and a second circular through hole (38) for mounting the horizontal leveler (2), the horizontal leveler (2) is circular in shape, and the horizontal leveler (2) is embedded within the second circular through hole (38).

11. The multifunctional leveling meter for convenient positioning using nano adhesive stickers according to Claim 10, **characterized in that**: there is a hanger connector (39) between the first circular through hole (37) and the second circular through hole (38), and the surface of the hanger connector (39) is provided with a recess for sticking product's labels.

12. The multifunctional leveling meter for convenient positioning using nano adhesive stickers according to Claim 1, **characterized in that**: the vertical leveler (3) is arranged within a rectangular fixture (40), the rectangular fixture (40) comprises a rectangular insertion portion (41) and a trapezoidal mounting portion (42), the first side of the leveling ruler (1) is provided with a trapezoidal opening, the vertical leveler (3) is fixedly arranged within the trapezoidal mounting portion (42), the rectangular fixture (40) is transversely inserted and fixed on the leveling ruler (1) through the rectangular insertion portion (41).

## Patentansprüche

1. Multifunktionales Nivelliergerät zur bequemen Positionierung mittels Nano-Haftaufkleber umfassend
ein Nivellierlineal (1), das ein Hohlprofilstab ist, wobei das Nivellierlineal (1) mit einer horizontalen Nivelliereinrichtung (2) und einer vertikalen Nivelliereinrichtung (3) versehen ist, die horizontale Nivelliereinrichtung (2) innerhalb eines ersten Endes des Nivellierlineals (1) angeordnet ist und die vertikale Nivelliereinrichtung (3) auf einer ersten Seite des Nivellierlineals (1) angeordnet ist, wobei die erste Seitenfläche des Nivellierlineals (1) dazu konfiguriert ist, mit mindestens zwei Nano-Haftaufklebern (4) zur bequemen Positionierung zu kleben und fixieren, wobei eine Haftaufkleber-Positionierungsstruktur an jedem der Nano-Haftaufkleber (4) angeordnet ist;
wobei ein zweites Ende des Nivellierlineals (1) mit einer Winkelmessvorrichtung (5) versehen ist, die zu einer 360°-Allrichtungsmessung fähig ist, und eine Schwingungsart-Durchbiegungsmessstruktur zum kooperativen Beobachten, ob die erste Seitenfläche geneigt ist oder nicht, wobei die Schwingungsart-Durchbiegungsmessstruktur eine Schwingungsverbindungsstange (6), einen Gegengewichtskonus (7) und eine Ausrichtungsnadel (8) umfasst, wobei der Gegengewichtskonus (7) in der Mitte der Schwingungsverbindungsstange (6) angebracht ist, und die Ausrichtungsnadel (8) vertikal auf den Gegengewichtskonus (7) zeigt, wobei die Haftaufkleber-Positionierungsstruktur eine in das Nivellierlineal (1) einführende Positionierungs- und Montagebasis (43) und eine Positionierungs- und Montageplatte (44) umfasst, und die obere Fläche der Positionierungs- und Montageplatte (44) mit einem Hohlraum (45) zur Aufnahme von Nano-Haftaufklebern (4) versehen ist; wobei gerichtete Einführungsschlitze (46) jeweils auf einer ersten Seite und einer zweiten gegenüberliegenden Seite der Positionierungs- und Montagebasis (43) vorgesehen sind, und Einführungsabschnitte (47), die mit den gerichteten Einführungsschlitzen (46) ausgestattet sind, auf einer ersten Seite und einer zweiten gegenüberliegenden Seite der Positionierungs- und Montageplatte (44) vorgesehen sind, wobei die Positionierungs- und Montageplatte (44) und die Positionierungs- und Montagebasis (43) durch Einführen des Einführungsabschnitts (47) in die Positionierungs- und Einführungsschlitze (46) integral zusammengebaut werden.

2. Multifunktionales Nivelliergerät zur bequemen Positionierung mittels Nano-Haftaufkleber nach Anspruch 1, **dadurch gekennzeichnet, dass** in der Schlitzwand des gerichteten Einführungsschlitzes (46) eine Positionierungsvertiefung (48) vorgesehen ist und der Einführungsabschnitt (47) mit einem der Positionierungsvertiefung (48) entsprechenden Positionierungshöcker (49) versehen ist, wenn die Positionierungs- und Montageplatte (44) und die Positionierungs- und Montagebasis (43) eingesetzt sind, befindet sich der Positionierungshöcker (49) genau in der Positionierungsvertiefung (48).

3. Multifunktionales Nivelliergerät zur bequemen Positionierung mittels Nano-Haftaufkleber nach Anspruch 1, **dadurch gekennzeichnet, dass** die Außenseite der Positionierungs- und Montageplatte (44) mit einem Metallpressrahmen (50) zur Verstärkung des Nano-Haftaufklebers (4) versehen ist, beide Seiten des Metallpressrahmens (50) nach dem Biegen mit beiden Seiten der Positionierungs- und Montageplatte (44) verklemmt und fixiert sind, und ein Streifenloch zur Erleichterung der Freilegung des Nano-Haftaufklebers in der Mitte des Metallpressrahmens (50) vorgesehen ist.

4. Multifunktionales Nivelliergerät zur bequemen Positionierung mittels Nano-Haftaufkleber nach Anspruch 1, **dadurch gekennzeichnet, dass** die Winkelmesseinrichtung (5) und die Pendelauslenkungsmessstruktur in einer vollständig transparenten Schutzschale (9) angeordnet sind, die Schutzschale (9) eine vordere Schalenabdeckung (10) und eine hintere Schalenabdeckung (11) umfasst, die miteinander kombiniert sind, das untere Ende der vorderen Schalenabdeckung (10) in das zweite Ende des Nivellierlineals (1) eingesetzt und befestigt ist, und der mittlere Abschnitt der vorderen Schalenabdeckung (10) mit Positionierungs- und Montageabschnitten (12) zur festen Montage der Winkelmesseinrichtung (5) und der Pendelauslenkungsmessstruktur versehen ist.

5. Multifunktionales Nivelliergerät zur bequemen Positionierung mittels Nano-Haftaufkleber nach Anspruch 4, **dadurch gekennzeichnet, dass** die Winkelmesseinrichtung (5) eine kreisförmige Skalenscheibe (13) und eine Skalenscheibenbefestigung (14) aufweist, wobei in der Mitte der kreisförmigen Skalenscheibe (13) eine Drehwelle (15) angeordnet ist, an der Drehwelle (15) eine zur Drehwelle (15) senkrecht stehende Nadel (16) vorgesehen ist und am hinteren Ende der Nadel (16) ein Gegengewichtsblock (17) angeschlossen ist; der Umfang des Zifferblattbefestigungselements (14) mit Positionierungs- und Einsteckpfosten (18) versehen ist, die den Positionierungs- und Montageabschnitten (12) entsprechen, wenn die vordere Schalenabdeckung (10) und die hintere Schalenabdeckung (11) miteinander kombiniert sind, die beiden Enden der Drehwelle (15) und der Zifferblattbefestigung (14) jeweils zwischen der vorderen Schalenabdeckung (10) und der hinteren Schalenabdeckung (11) befestigt sind und die Schwingungsverbindungsstange (6) horizontal und quer zwischen der vorderen Schalenabdeckung (10) und der hinteren Schalenabdeckung (11) montiert ist.

6. Multifunktionales Nivelliergerät zur bequemen Positionierung mittels Nano-Haftaufkleber nach Anspruch 4, **dadurch gekennzeichnet, dass** am unteren Ende der vorderen Schalenabdeckung (10) eine separate Montagekammer (19) vorgesehen ist, die sich vom unteren Ende der vorderen Schalenabdeckung (10) aus erstreckt, und die separate Montagekammer (19) einstückig mit der vorderen Schalenabdeckung (10) ausgebildet ist; eine LED-Lampe (20), eine Leiterplatte (21), eine wiederaufladbare Batterie und eine Batterieabdeckung (22) in der separaten Montagekammer (19) angeordnet sind, die LED-Lampe (20) und die wiederaufladbare Batterie beide elektrisch mit der Leiterplatte (21) verbunden sind, eine Seite der Leiterplatte (21) mit einer USB-Schnittstelle (23) für externe Verbindung und Aufladung und einem Druckschalter (24) zur Steuerung der LED-Lampe (20) versehen ist, die Seiten der Batterieabdeckung (22) mit schnappbaren Schnappverbindungen versehen sind, die Batterieabdeckung (22) mit der separaten Montagekammer (19) durch schnappbare Schnappverbindungen verbunden ist, und die LED-Lampe (20), die Leiterplatte (21) und die wiederaufladbare Batterie innerhalb der separaten Montagekammer (19) eingekapselt sind.

7. Multifunktionales Nivelliergerät zur bequemen Positionierung mittels Nano-Haftaufkleber nach Anspruch 6, **dadurch gekennzeichnet, dass** die separate Montagekammer (19) mit einer transparenten Platte (25) versehen ist, und die transparente Platte (25) mit einem kreisförmigen Loch (26) versehen ist, das an die Größe der LED-Lampe (20) angepasst ist, und ein Ende der LED-Lampe (20) aus dem kreisförmigen Loch (26) herausragt; und die transparente Platte (25) ferner mit einem kreisförmigen Befestigungsloch (27) versehen ist, und das Ende der Ausrichtungsnadel (8) in das kreisförmige Befestigungsloch (27) eingesetzt und befestigt ist.

8. Multifunktionales Nivelliergerät zur bequemen Positionierung mittels Nano-Haftaufkleber nach Anspruch 6, **dadurch gekennzeichnet, dass** das Nivellierlineal (1) auf der Seite der USB-Schnittstelle (23) mit einer Ladung-Abdichtungsgummiplatte (28) versehen ist und an einem Ende der Ladung-Abdichtungsgummiplatte (28) eine Gummizugniete (29) zum Einstecken des Nivellierlineals (1) angeordnet ist.

9. Multifunktionales Nivelliergerät zur bequemen Positionierung mittels Nano-Haftaufkleber nach Anspruch 4, **dadurch gekennzeichnet, dass** die Oberseite der Schutzschale (9) und die Unterseite des Nivellierlineals (1) jeweils mit Fallschutz-Silikongummiteilen (30) versehen sind, jedes Fallschutz-Silikongummiteil (30) einen Gummisteckpfosten (31) und mehrere Silikongummistreifen (32) umfasst, der Gummisteckpfosten (31) ist quer mit einem Verriegelungsbolzen (33) und einer Befestigungsmutter (34) versehen, wenn der Gummisteckpfosten (31) in das Innere der Schutzschale (9) und des Nivellierlineals (1) eingeführt ist, wird der Verriegelungsbolzen (33) mit der Befestigungsmutter (34) verschraubt, um das Fallschutz-Silikongummiteil (30) zu fixieren.

10. Multifunktionales Nivelliergerät zur bequemen Positionierung mittels Nano-Haftaufkleber nach Anspruch 1, **dadurch gekennzeichnet, dass** das erste Ende des Nivellierlineals (1) mit einem Kunststoffaufhänger zum bequemen Aufhängen und Platzieren versehen ist, der Kunststoffaufhänger durchgehend im Nivellierlineal (1) befestigt ist, und der Kunststoffaufhänger eine vordere Aufhängerabdeckung (35) und eine hintere Aufhängerabdeckung (36) umfasst, die miteinander verschnappt werden können; der Kunststoffaufhänger mit einem ersten kreisförmigen Durchgangsloch (37) zum Aufhängen und einem zweiten kreisförmigen Durchgangsloch (38) zum Befestigen der horizontalen Nivelliereinrichtung (2) versehen ist, die horizontale Nivelliereinrichtung (2) kreisförmig ist und die horizontale Nivelliereinrichtung (2) in das zweite kreisförmige Durchgangsloch (38) eingebettet ist.

11. Multifunktionales Nivelliergerät zur bequemen Positionierung mittels Nano-Haftaufkleber nach Anspruch 10, **dadurch gekennzeichnet, dass** zwischen ersten kreisförmigen Durchgangsloch (37) und dem zweiten kreisförmigen Durchgangsloch (38) ein Hängeverbinder (39) vorhanden ist und die Oberfläche des Hängeverbinders (39) mit einer Aussparung zum Aufkleben von Produktetiketten versehen ist.

12. Multifunktionales Nivelliergerät zur bequemen Positionierung mittels Nano-Haftaufkleber nach Anspruch 1, **dadurch gekennzeichnet, dass** die vertikale Nivelliereinrichtung (3) innerhalb einer rechteckigen Halterung (40) angeordnet ist, die rechteckige Halterung (40) einen rechteckigen Einsteckabschnitt (41) und einen trapezförmigen Montageabschnitt (42) aufweist, die erste Seite des Nivellierlineals (1) mit einer trapezförmigen Öffnung versehen ist, die vertikale Nivelliereinrichtung (3) fest in dem trapezförmigen Montageabschnitt (42) angeordnet ist, die rechteckige Halterung (40) durch den rechteckigen Einführungsabschnitt (41) quer in das Nivellierlineal (1) eingeführt und daran befestigt wird.

## Revendications

1. Un niveau multifonction pour un positionnement pratique utilisant des autocollants nano-adhésifs, comprenant
une règle de nivellement (1) qui est un profilé creux, la règle de nivellement (1) étant pourvue respectivement d'un niveleur horizontal (2) et d'un niveleur vertical (3), le niveleur horizontal (2) étant disposé à une première extrémité de la règle de nivellement (1), et le niveleur vertical (3) étant disposé sur un premier côté de la règle de nivellement (1), la première surface latérale de la règle de nivellement (1) étant configurée pour être collée et fixée à au moins deux autocollants nano-adhésifs (4) pour un positionnement pratique, une structure de positionnement d'autocollant étant disposée en regard de chacun des autocollants nano-adhésifs (4) ;
une seconde extrémité de la règle de nivellement (1) étant pourvue d'un dispositif de mesure d'angle (5) capable d'une mesure directionnelle complète à 360° et d'une structure de mesure de déviation de type oscillant permettant d'observer conjointement si la première surface latérale est inclinée ou non, la structure de mesure de déviation de type oscillant comprenant une tige de liaison oscillante (6), un cône de contrepoids (7) et une aiguille d'alignement (8), le cône de contrepoids (7) étant monté au milieu de la tige de liaison oscillante (6), et l'aiguille d'alignement (8) pointant verticalement vers le cône de contrepoids (7),
la structure de positionnement d'autocollant comprenant une base de positionnement et de montage (43) insérée dans la règle de nivellement (1) et une plaque de positionnement et de montage (44), la surface supérieure de la plaque de positionnement et de montage (44) étant pourvue d'une cavité (45) pour loger les autocollants nano-adhésifs (4) ; des fentes d'insertion directionnelles (46) étant respectivement prévues sur un premier côté et un second côté opposé de la base de positionnement et de montage (43), et des parties d'insertion (47) ajustées aux fentes d'insertion directionnelles (46) étant prévues sur un premier côté et un second côté opposé de la plaque de positionnement et de montage (44), la plaque de positionnement et de montage (44) et la base de positionnement et de montage (43) étant assemblées de manière intégrée par insertion des parties d'insertion (47) dans les fentes d'insertion (46).

2. Le niveau multifonction pour un positionnement pratique utilisant des autocollants nano-adhésifs selon la revendication 1, **caractérisé en ce qu'**une cavité de positionnement (48) est prévue dans la paroi de la fente d'insertion directionnelle (46), et la partie d'insertion (47) est pourvue d'une bosse de positionnement (49) correspondant à la cavité de positionnement (48), lorsque la plaque de positionnement et de montage (44) et la base de positionnement et de montage (43) sont insérées en place, la bosse de positionnement (49) est exactement située dans la cavité de positionnement (48).

3. Le niveau multifonction pour un positionnement pratique utilisant des autocollants nano-adhésifs selon la revendication 1, **caractérisé en ce que** le côté extérieur de la plaque de positionnement et de montage (44) est pourvu d'un cadre de pression métallique (50) pour renforcer l'autocollant nano-adhésif (4), après pliage, les deux côtés du cadre de pression métallique (50) sont pincés et fixés avec les deux côtés de la plaque de positionnement et de montage (44), et un orifice en bande permettant l'exposition de l'autocollant nano-adhésif est prévu au milieu du cadre de pression métallique (50).

4. Le niveau multifonction pour un positionnement pratique utilisant des autocollants nano-adhésifs selon la revendication 1, **caractérisé en ce que** le dispositif de mesure d'angle (5) et la structure de mesure de déviation de type oscillant sont disposés dans une coque de protection complètement transparente (9), la coque de protection (9) comprenant un couvercle avant (10) et un couvercle arrière (11) qui sont assemblés l'un à l'autre, l'extrémité inférieure du couvercle avant (10) étant insérée et fixée à l'intérieur de la seconde extrémité de la règle de nivellement (1), et la partie centrale du couvercle avant (10) étant pourvue de parties de positionnement et de montage (12) pour le montage fixe du dispositif de mesure d'angle (5) et de la structure de mesure de déviation de type oscillant.

5. Le niveau multifonction pour un positionnement pratique utilisant des autocollants nano-adhésifs selon la revendication 4, **caractérisé en ce que** : le dispositif de mesure d'angle (5) comprend un cadran circulaire (13) et un support de cadran (14), un arbre rotatif (15) étant disposé au centre du cadran circulaire (13), une aiguille (16) perpendiculaire à l'arbre rotatif (15) étant prévue sur l'arbre rotatif (15), et un bloc de contrepoids (17) étant connecté à l'extrémité arrière de l'aiguille (16) ; la circonférence de l'élément de fixation du cadran (14) est pourvue de tenons de positionnement et d'insertion (18) correspondant aux parties de positionnement et de montage (12), lorsque le couvercle avant (10) et le couvercle arrière (11) sont combinés ensemble, les deux extrémités de l'arbre rotatif (15) et du support de cadran (14) sont respectivement fixées entre le couvercle avant (10) et le couvercle arrière (11), et la tige de liaison oscillante (6) est montée horizontalement et transversalement entre le couvercle avant (10) et le couvercle arrière (11).

6. Le niveau multifonction pour un positionnement pratique utilisant des autocollants nano-adhésifs selon la revendication 4, **caractérisé en ce que** : une chambre de montage séparée (19) est prévue à l'extrémité inférieure du couvercle avant (10) et s'étend à partir de celle-ci, et la chambre de montage séparée (19) est formée d'une seule pièce avec le couvercle avant (10) ; une lampe LED (20), une carte de circuit imprimé (21), une batterie rechargeable et un couvercle de batterie (22) sont disposés dans la chambre de montage séparée (19), la lampe LED (20) et la batterie rechargeable étant toutes deux connectées électriquement à la carte de circuit imprimé (21), un côté de la carte de circuit imprimé (21) étant pourvu d'une interface USB (23) pour connexion et charge externes ainsi que d'un interrupteur à bouton-poussoir (24) pour contrôler la lampe LED (20), les côtés du couvercle de batterie (22) étant pourvus de tenons d'encliquetage, le couvercle de batterie (22) étant connecté à la chambre de montage séparée (19) par des tenons d'encliquetage, et la lampe LED (20), la carte de circuit imprimé (21) et la batterie rechargeable étant encapsulées à l'intérieur de la chambre de montage séparée (19).

7. Le niveau multifonction pour un positionnement pratique utilisant des autocollants nano-adhésifs selon la revendication 6, **caractérisé en ce que** : la chambre de montage séparée (19) est pourvue d'une plaque transparente (25), et la plaque transparente (25) est pourvue d'un trou circulaire (26) adapté à la taille de la lampe LED (20), et une extrémité de la lampe LED (20) dépasse du trou circulaire (26) ; et la plaque transparente (25) est en outre pourvue d'un trou de fixation circulaire (27), et l'extrémité de l'aiguille d'alignement (8) est insérée et fixée dans le trou de fixation circulaire (27).

8. Le niveau multifonction pour un positionnement pratique utilisant des autocollants nano-adhésifs selon la revendication 6, **caractérisé en ce que** : la règle de nivellement (1) est pourvue d'une feuille de caoutchouc d'étanchéité de charge (28) sur le côté de l'interface USB (23), et un rivet de traction en caoutchouc (29) destiné à être inséré dans la règle de nivellement (1) est disposé à une extrémité de la feuille de caoutchouc d'étanchéité de charge (28).

9. Le niveau multifonction pour un positionnement pratique utilisant des autocollants nano-adhésifs selon la revendication 4, **caractérisé en ce que** : le haut de la coque de protection (9) et le bas de la règle de nivellement (1) sont respectivement pourvus de pièces en caoutchouc silicone de protection contre les chutes (30), chaque pièce en caoutchouc silicone de protection contre les chutes (30) comprend un tenon en caoutchouc (31) et plusieurs bandes en caoutchouc silicone (32), le tenon en caoutchouc (31) est transversalement pourvu d'un boulon de verrouillage (33) et d'un écrou de fixation (34), lorsque le tenon en caoutchouc (31) est inséré à l'intérieur de la coque de protection (9) et de la règle de nivellement (1), le boulon de verrouillage (33) est vissé avec l'écrou de fixation (34) pour fixer la pièce en caoutchouc silicone de protection contre les chutes (30).

10. Le niveau multifonction pour un positionnement pratique utilisant des autocollants nano-adhésifs selon la revendication 1, **caractérisé en ce que** : la première extrémité de la règle de nivellement (1) est pourvue d'un crochet en plastique pour un accrochage et un rangement pratiques, le crochet en plastique est fixé à travers la règle de nivellement (1), et le crochet en plastique comprend un couvercle avant de crochet (35) et un couvercle arrière de crochet (36) pouvant s'encliqueter l'un avec l'autre ; le crochet en plastique est pourvu d'un premier trou traversant circulaire (37) pour l'accrochage et d'un second trou traversant circulaire (38) pour le montage du niveau à bulle horizontal (2), le niveau à bulle horizontal (2) est de forme circulaire, et le niveau à bulle horizontal (2) est encastré dans le second trou traversant circulaire (38).

11. Le niveau multifonction pour un positionnement pratique utilisant des autocollants nano-adhésifs selon la revendication 10, **caractérisé en ce que** : il y a un connecteur de crochet (39) entre le premier trou traversant circulaire (37) et le second trou traversant circulaire (38), et la surface du connecteur de crochet (39) est pourvue d'un renfoncement destiné à coller les étiquettes du produit.

12. Le niveau multifonction pour un positionnement pratique utilisant des autocollants nano-adhésifs selon la revendication 1, **caractérisé en ce que** : le niveau à bulle vertical (3) est disposé à l'intérieur d'un support rectangulaire (40), le support rectangulaire (40) comprend une partie d'insertion rectangulaire (41) et une partie de montage trapézoïdale (42), le premier côté de la règle de nivellement (1) est pourvu d'une ouverture trapézoïdale, le niveau à bulle vertical (3) est fixé de manière permanente dans la partie de montage trapézoïdale (42), le support rectangulaire (40) est inséré transversalement et fixé sur la règle de nivellement (1) par la partie d'insertion rectangulaire (41).
